(19) Europäisches Patentamt
European Patent Office
Office européen des brevets

(11) EP 2 692 875 B1

(12) **EUROPEAN PATENT SPECIFICATION**

(45) Date of publication and mention
of the grant of the patent:
**13.12.2017 Bulletin 2017/50**

(21) Application number: **12765247.7**

(22) Date of filing: **28.03.2012**

(51) Int Cl.:
*C21D 9/08* *(2006.01)*    *C21D 8/02* *(2006.01)*
*C21D 9/50* *(2006.01)*    *C22C 38/00* *(2006.01)*
*C22C 38/14* *(2006.01)*    *C22C 38/58* *(2006.01)*
*C21D 8/10* *(2006.01)*    *C22C 38/04* *(2006.01)*
*C22C 38/12* *(2006.01)*

(86) International application number:
**PCT/JP2012/058192**

(87) International publication number:
**WO 2012/133558 (04.10.2012 Gazette 2012/40)**

(54) **ELECTROSEAMED STEEL PIPE AND PROCESS FOR PRODUCING SAME**

ELEKTROGESCHWEISSTES STAHLROHR UND VERFAHREN ZU SEINER HERSTELLUNG

TUYAU D'ACIER ÉLECTROSOUDÉ LONGITUDINALEMENT ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2011 JP 2011074486**

(43) Date of publication of application:
**05.02.2014 Bulletin 2014/06**

(73) Proprietor: **Nippon Steel & Sumitomo Metal
Corporation
Tokyo 100-8071 (JP)**

(72) Inventors:
• **ASAHI, Hitoshi**
**Tokyo 100-8071 (JP)**
• **SHINOHARA, Yasuhiro**
**Tokyo 100-8071 (JP)**
• **NAGAI, Kensuke**
**Tokyo 100-8071 (JP)**
• **NAKAMURA, Hideyuki**
**Tokyo 100-8071 (JP)**

(74) Representative: **Vossius & Partner
Patentanwälte Rechtsanwälte mbB
Siebertstrasse 3
81675 München (DE)**

(56) References cited:
EP-A1- 0 494 448    EP-A1- 1 568 792
JP-A- 61 190 019    JP-A- H10 195 594
JP-A- 2005 040 816    JP-A- 2007 254 797
JP-A- 2008 121 036    JP-A- 2009 041 079
US-A1- 2009 301 613

**Description**

Technical Field

The present invention relates to electric resistance welded steel pipe and a method of production of the same.

Background Art

In recent years, the importance of line pipe as a means for long distance transport of mainly crude oil and natural gas has been rising. However, the environments in which line pipe is laid are diverse in nature. For example, the bending caused by fluctuations in the ground conditions in the different seasons in artic regions, the bending deforming due to the effects of ocean currents at the ocean floor, and the displacement and bending of line pipe due to fluctuations in geo strata due to earthquakes have become problems. Therefore, in addition to enough strength in the circumferential direction of steel pipe to be able to withstand high internal pressure, deformation resistance performance against the strain which acts in the axial direction of steel pipe has come to be demanded.

PLT's 1 and 2 propose such superior deformation performance, low yield ratio high strength steel pipe for pipeline use.

Further, in recent years, as the method of laying submarine line pipe, the method of reeling long pipe, which has finished being pipe-made and girth-welded together in advance on land, on a spool of an ocean-going reel barge and un-reeling the pipe from the spool on the ocean while laying it on the ocean floor is sometimes used. According to this method, it is possible to extremely efficiently perform the work of laying submarine line pipe.

However, with this method, the pipe is once coiled over a spool, then uncoiled, so part of the pipe is subjected to tensile and compressive stresses due to the bending and unbending. If the pipe (electric resistance welded steel pipe) which is being laid is insufficient in deformation performance, local buckling or pipe fracture initiating from the same is a concern.

For this reason, steel pipe of a low enough yield ratio whereby the pipe will not buckle is being demanded. The yield ratio (Y/T) is the ratio of the yield strength (YS) to the tensile strength (TS).

PLT 3 proposes, as a solution to this problem, to provide electric resistance welded steel pipe which controls the hardenability and limits the precipitation strengthening elements so as to prevent softening at the heat affected zone (HAZ) of the girth weld zone and improve layability.

Further, PLT 3 discloses art which limits Nb+V+Ti to 0.040% or less to thereby prevent local buckling from occurring at pipe when laying a pipeline. According to this method, it is possible to suppress softening of the heat affected zone to an extent posing substantially no problem and, furthermore, make the yield ratio of the weld zone 85% or less.

However, steel pipe for line pipe use is coated with a resin and heated after pipe-making from the viewpoint of corrosion prevention, so the strain introduced by the pipe-making and the heating cause strain aging and cause the yield strength to rise. Therefore, even if achieving a low yield ratio after pipe-making, it has been difficult to achieve a low yield ratio after heating the coating.

PLT 4 and PLT 5 solve this problem by the provision of methods which hot roll a steel slab, then acceleratedly cool it, then immediately temper it. These methods fix the solute C and N which cause strain aging as fine precipitates so as to improve the strain aging characteristics after heating the coating. These covered UOE steel pipe, therefore it is believed that the pipe-making strain was small and tempering at the steel plate stage was effective.

PLT 6 discloses the art of giving strain to the material before pipe-making, that is, steel strip, so as to induce the Bauschinger effect (phenomenon of yield strength falling in opposite direction to direction at which plastic deformation is caused) and thereby lower the yield ratio.

PLT 7 discloses the art of giving a suitable amount of compressive strain in the longitudinal direction of electric resistance welded steel pipe in the sizing step to adjust the outer shape and dimensions of the electric resistance welded steel pipe so as to utilize the Bauschinger effect to cause the yield ratio to fall.

Japanese Patent Publication 2008-121036 relates to a method for producing a steel sheet having tensile strength of greater than or equal to 570 MPa. The steel of the steel sheet contains, by mass, 0.06-0.12% C, lesser than or equal to 0.5% Si, 0.5% to 2.5% Mn, lesser than or equal to 0.08% Al, 0.005% to 0.025% Ti and the balance Fe with inevitable impurities.

EP 1568792 A1 relates to a hot-rolled steel sheet for high-strength ERW pipes containing about 0.02% to about 0.06% C; about 0.05% to about 0.50% Si; about 0.5% to about 1.5% Mn; about 0.010% or less P; about 0.0010% or less S; about 0.01% to about 0.10% A1; about 0.01% to about 0.10% Nb; about 0.001% to about 0.025% Ti; about 0.001% to about 0.005% Ca; about 0.003% or less O; and about 0.005% or less N, and at least one element selected from the group consisting of about 0.01% to about 0.10% V; about 0.01% to about 0.50% Cu; about 0.01% to about 0.50% Ni; and about 0.01% to about 0.50% Mo on the basis of mass. The group of C, Si, Mn, Cu, Ni, Mo, and V and the group of Ca, O, and S satisfy specific relationships, and the microstructure of the steel sheet is composed of about 95% by volume or more bainitic ferrite.

Citations List

Patent Literature

PLT 1: Japanese Patent Publication No. 2005-15823 A1
PLT 2: Japanese Patent Publication No. 2003-293089 A1
PLT 3: Japanese Patent Publication No. H3-211255 A1
PLT 4: Japanese Patent Publication No. 2005-60838 A1
PLT 5: Japanese Patent Publication No. 2005-60840 A1
PLT 6: Japanese Patent Publication No. 2006-122932 A1
PLT 7: Japanese Patent Publication No. 2006-289482 A1

Summary of Invention

Technical Problem

The methods of PLT 4 and PLT 5 perform reheating (tempering) for causing carbides to precipitate and solute C to be reduced right after hot rolling. That is, with these methods, tempering is performed before pipe-making so as to make fine precipitates precipitate, then the pipe is made. For this reason, the small amount of solute C which remains precipitates as carbides on the dislocations which are introduced by the pipe-making by heating and, as a result, the suppression of strain aging becomes unstable.

PLT 6 and PLT 7 both mention the drop of the yield ratio by utilizing the Bauschinger effect so as to lower the yield ratio. However, they do not mention at all the strain aging resistance characteristics after heating the coating. After heating the coating, it is believed that the dislocations are pinned and the yield ratio rises. These do not consider maintaining a low yield ratio.

The present invention was made in consideration of the above situation and has as its object the provision of a method of production of electric resistance welded steel pipe which suppresses a rise in the yield ratio due to heating of a coating and improves the deformation characteristics, that is, is excellent in strain aging resistance characteristics.

Solution to Problem

The inventors engaged in intensive research so as to solve the above problems and as a result obtained the findings which are shown below.

Usually, if tempering steel plate after pipe-making and before heating the coating, the dislocations merge and annihilate and the yield strength and tensile strength fall. In this case, the work hardening due to the pipe-making causes the yield strength to become higher, so the tempering causes the yield strength to drop more compared with the tensile strength and therefore the yield ratio to fall.

However, in the conventional electric resistance welded steel pipe containing large amount of Nb, the strain introduced by pipe-making causes the precipitation of Nb carbides to progress and therefore the yield strength and tensile strength to rise. With such precipitation hardening, it was learned that the rise in the yield strength was particularly large and, as a result, the yield ratio conversely rose.

Therefore, first, a steel slab with the reduced amount of Nb is hot rolled to steel plate, then is coiled by a predetermined coiling temperature to thereby cause Nb carbides to precipitate. Further, the steel plate is made into pipe, that introduce strain, then is reheated in a predetermined temperature range (tempered) to thereby cause the solute carbon to further precipitate as cementite or Nb carbides or other carbides. Due to this, the amount of solute C becomes further lower than even the case of tempering before forming.

That is, by reducing the amount of Nb, it is possible to suppress precipitation of Nb carbides due to tempering after pipe-making. Further, the dislocations which were introduced in the forming process of the steel pipe are pinned by the precipitated fine carbides and carbon atom clusters and Nb carbides. At the same time, dislocations merge and annihilate. As a result, the yield strength falls more than the tensile strength. Furthermore, tempering after pipe-making causes precipitation of cementite and other carbides to be accelerated, the amount of solute carbon to remarkably decrease, the rise in the yield ratio after heating for the coating to be able to be prevented, and the strain aging resistance characteristics to be improved.

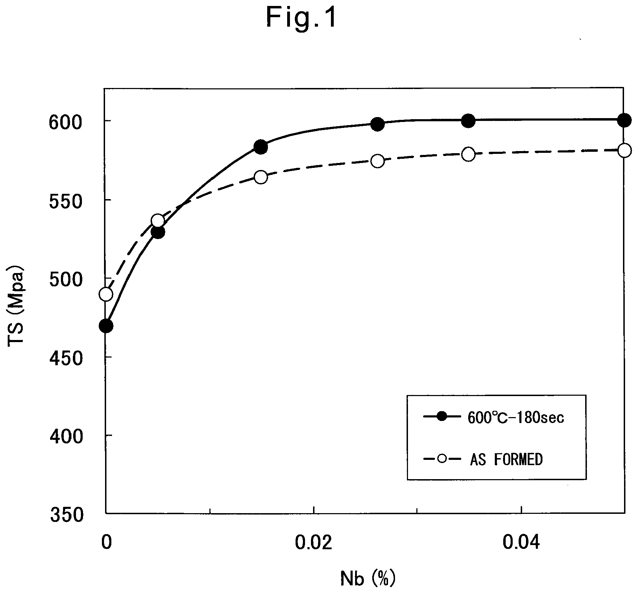

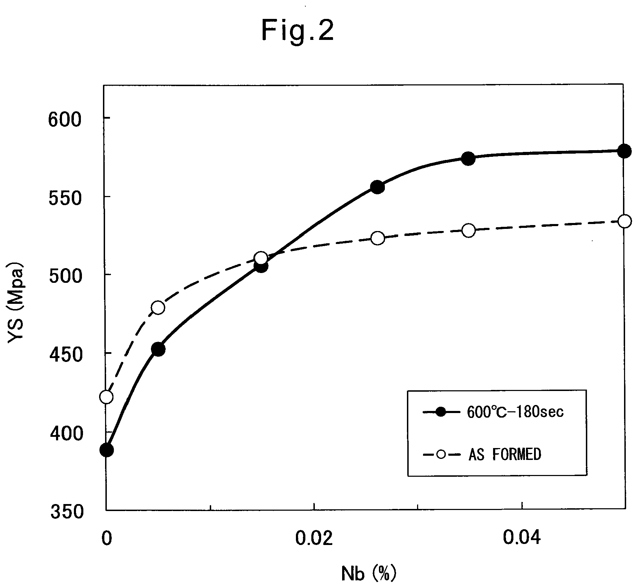

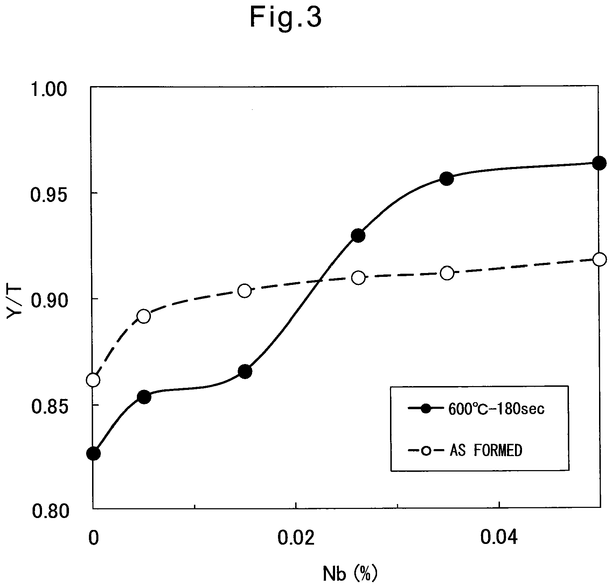

FIG. 1 shows a relationship between an amount of Nb and a tensile strength (TS) in steel pipe with a base chemical composition of 0.9%C-1.2%Mn, FIG. 2 illustrates a relationship between an amount of Nb and a yield strength (YS), and FIG. 3 shows a relationship between an amount of Nb and a yield ratio (Y/T). The white circles in the figures indicate the results for steel pipes as shaped, while the black closed circles show the results for steel pipes which are formed, then tempered at 600°C for 180 seconds.

From these figures, it is learned that if the amount of Nb rises, the rise in the yield strength (YS) after tempering becomes larger and, as a result, the yield ratio (Y/T) also greatly rises. This trend appears conspicuously when the amount of Nb becomes 0.02% or more. Therefore, it was learned that to keep down the rise in the yield ratio (Y/T) due to the heating for the coating, Nb has to be reduced to less than 0.02%.

The inventors reached the present invention by the technical idea based on these findings and the present invention is defined by the features of the claims.

Advantageous Effects of Invention

According to the present invention, it is possible to provide a method of production of electric resistance welded steel pipe which maintains a low yield ratio even after tempering, that is, suppresses a rise in the yield ratio due to heating of a coating, and is excellent in the deformation characteristics preferred for a pipeline. Therefore, the contribution to industry is extremely remarkable.

Brief Description of Drawings

FIG. 1 is a graph which shows a relationship between an amount of Nb in steel pipe and a tensile strength (TS).
FIG. 2 is a graph which shows a relationship between an amount of Nb in steel pipe and a yield strength (YS).
FIG. 3 is a graph which shows a relationship between an amount of Nb in steel pipe and a yield ratio (Y/T).

Description of Embodiments

Below, a method of production of electric resistance welded steel pipe of the present invention will be explained in detail.

The method of production of electric resistance welded steel pipe of the present invention comprises hot rolling a steel slab which contains, by mass%, C: 0.03 to 0.12%, Si: 0.03 to 0.5%, Mn: 0.5 to 2.0%, P: 0.03% or less, S: 0.003% or less, Al: 0.10% or less, Nb: 0.003% to less than 0.02%, Ti: 0.005 to 0.03%, and N: 0.006% or less, satisfies Ti>3.4N and weld cracking parameter Pcm$\leq$0.21%, and has a balance of Fe and unavoidable impurities; coiling the hot rolled steel plate at 600°C or less, then forming this hot rolled steel plate to a pipe shape and welding the edge faces by electric resistance welding to obtain electric resistance welded steel pipe, then heating this electric resistance welded steel pipe to a heating temperature of 400 to 720°C in range.

Here, in the chemical composition, lack of provision of a lower limit indicates inclusion down to the level of unavoidable impurities.

Below, the reasons for limiting the chemical elements of the steel material of the present invention will be explained. Note that, below, the symbol "%" means mass% unless otherwise indicated.

(C: 0.03 to 0.12%)

C is an element which is extremely effective for improvement of the strength. In the present invention, to secure the strength, the lower limit of the content is made 0.03%. On the other hand, if the content of C is too large, the low temperature toughness of the base material is degraded and the weld cracking parameter increase and resultantly the field weldability is liable to be remarkably degraded, so the upper limit is made 0.12%.

Further, C is an element which forms carbides to contribute to precipitation strengthening. Therefore, the content of C is preferably 0.05 to 0.1%. Note that, the uniform elongation becomes higher the greater the amount of C, while the low temperature toughness and weldability are better the smaller the amount of C. It is necessary to consider the balance by the levels of the demanded characteristics.

(Si: 0.03 to 0.5%)

Si is an element which is useful for deoxidation or improvement of the strength. The lower limit of the Si content is made 0.03% so as to sufficiently secure the deoxidation. On the other hand, if Si is included in a large amount, the toughness and the ERW weldability are degraded, so the upper limit is made 0.5%. Preferably, the content is 0.07 to 0.3%.

(Mn: 0.5 to 2.0%)

Mn is an element which is useful for improvement of the strength and the low temperature toughness. The lower limit of the Mn content is made 0.5% so as to sufficiently obtain the effect of improvement of the strength and the low temperature toughness. On the other hand, Mn also, if included in a large amount, like Si, is liable to cause the toughness and the weldability to be degraded, so the upper limit is made 2.0%. Preferably, the content is 0.5 to 1.6%.

(P: 0.03% or less)

P is an impurity and an element which degrades the low temperature toughness, so the smaller the content, the better. However, it is necessary to balance the cost at the steel-making stage and the above such characteristics. In the present invention, the upper limit is made 0.03%.

(S: 0.003% or less)

S, like P, is an element which is present as an impurity. The smaller the content of S the better also. Reducing the content of S reduces the MnS and therefore can improve the toughness. However, considering the cost at the steel-making stage, the upper limit is made 0.003%.

(Al: 0.10% or less)

Al is an element which is usually included in a steel material as a deoxidizing element, but if its content exceeds 0.10%, Al-based nonmetalic inclusions increase and the cleanliness of the steel material is liable to be impaired and the toughness to be degraded, so the upper limit is made 0.10%. If considering the balance between securing a stable deoxidation effect and toughness, the content is preferably 0.01 to 0.06%.

(Nb: 0.003% to less than 0.02%)

Nb, in the present invention, is an element which is important for securing the strength and toughness and suppressing strain aging. Nb not only suppresses recrystallization of austenite at the hot rolling so as to refine the micro structure, but also has the effect of contributing to the increase in hardenability and strengthening and toughening the steel material.
In the present invention, in particular, to suppress recrystallization and to accelerate ferrite transformation by accelerated cooling after hot rolling, 0.003% or more of Nb is added. On the other hand, if the Nb content is too large, it becomes difficult to suppress the precipitation hardening by heating after pipe-making (tempering) and sufficiently reduce the yield ratio. The upper limit of the Nb content is made less than 0.02%.
To stably secure strain aging resistance, the content is preferably made 0.004 to 0.012%.

(Ti: 0.005 to 0.03% and Ti>3.4N)

Ti forms fine TiN and suppresses coarsening of the austenite grains of the base material in slab reheating and HAZ so as to refine the microstructure and has the role of improving the low temperature toughness of the base material and HAZ. Further, it has the role of fixing solute N as TiN. For these purposes, the amount of Ti added is made over 3.4N (by mass%).
To obtain these effects, addition of 0.005% or more of Ti is necessary. On the other hand, if the content of Ti is too large, coarsening of the TiN and precipitation hardening due to the TiC occur and the low temperature toughness is liable to be degraded, so the upper limit is made 0.03%. Preferably, the content is 0.01 to 0.02%.

(N: 0.006% or less)

N is an element which, if present as solute N in a steel material, like C causes strain aging. In the present invention, to suppress the drop in deformation performance due to strain aging, the solute N is fixed as TiN. However, if the content of N is too large, the TiN excessively increases and surface defects, a deterioration in toughness, and other problems are liable to occur, so the upper limit is made 0.006%. On the other hand, the fine TiN which is formed in the steel suppresses the coarsening of the austenite grains of the base material in slab reheating and HAZ so as to refine the microstructure and thereby contributes to the improvement of the low temperature toughness of the base material and HAZ. Preferably, the content is 0.002 to 0.004%.
In the present invention, in addition to the above elements, it is also possible to add one or more elements which are selected from Ni: 1% or less, Cu: 1% or less, Mo: 0.3% or less, Cr: 0.8% or less, V: 0.1% or less, and Ca: 0.0060% or less.

Ni is an element which contributes to improvement of the strength and the toughness. However, Ni is an expensive element. If the amount added is too large, the economicalness is damaged, so the upper limit of the content is preferably made 1%. The more preferable upper limit is 0.3%.

Addition of Ni is also effective for preventing Cu cracking at the time of continuous casting and at the time of hot rolling. To obtain this effect, the amount of Ni is preferably made 1/3 or more of the amount of Cu.

In the present invention, Ni is an optional element. It does not necessarily have to be added, but to stably obtain the above effect of addition of Ni, the lower limit of the content is preferably made 0.1%.

Cu is an element which is effective for improvement of the strength of the base material and the weld zone, but if added in too large an amount, the toughness of the HAZ and the field weldability are liable to be remarkably degraded. For this reason, the upper limit of the amount of Cu is preferably made 1%. The more preferable upper limit is 0.5%.

In the present invention, Cu is an optional element and does not necessarily have to be added, but to stably obtain the effect due to addition of Cu, the lower limit of the content is preferably made 0.3%.

The reason for adding Mo is to improve the hardenability of the steel material and to obtain high strength. Further, Mo works together with Nb to suppress recrystallization of austenite at the time of hot-rolling and to contribute to refinement of the austenite structure. However, Mo is an expensive element. If excessively added, the economicalness is damaged, so the upper limit is preferably made 0.3%.

In the present invention, Mo is an optional element and does not necessarily have to be added, but to stably obtain the effect due to addition of Mo, the lower limit of the content is preferably made 0.1%.

Cr is an element which is effective for improving the strength of the base material and the weld zone, but if added in too large an amount, the toughness of the HAZ and the field weldability are liable to be remarkably degraded. Therefore, the upper limit of the amount of Cr is preferably made 0.8%. The more preferable upper limit is 0.5%.

In the present invention, Cr is an optional element and does not necessarily have to be added, but to stably obtain the effect due to addition of Cr, the lower limit of the content is preferably made 0.2%.

V has substantially the same effect as Nb, but the effect is lower compared with Nb. Further, V also has the effect of suppressing softening of the weld zone. However, the upper limit of the amount of V is preferably made 0.1% from the viewpoint of the toughness of the HAZ and the field weldability.

In the present invention, V is an optional element and does not necessarily have to be added, but the lower limit of the content is preferably made 0.04%.

Ca is an element which controls the shape of the sulfide-based inclusions and improves the low temperature toughness. If the amount of Ca exceeds 0.006%, the CaO-CaS forms large clusters and inclusions and the toughness is liable to be detrimentally affected. For this reason, the upper limit of the amount of addition of Ca is preferably made 0.006%. The more preferable upper limit is 0.004%.

In the present invention, Ca is an optional element and does not necessarily have to be added, but to stably obtain the effect due to addition of Ca, the lower limit of the content is preferably made 0.001%.

The balance other than the above elements is comprised of Fe and unavoidable impurities. In addition to the above elements, it is also possible to add trace amounts of elements which do not impair the action and effect of the present invention.

Further, in the present invention, the weld cracking parameter Pcm is made 0.21% or less. In the above chemical composition system, if this Pcm exceeds 0.21%, the weld cracking parameter is liable to remarkably rise and the toughness of the weld zone to deteriorate. For this reason, the Pcm is made 0.21% or less.

The Pcm is given by the following formula:

$$Pcm=C+Si/30+Mn/20+Cu/20+Ni/60+Cr/20+Mo/15+V/10\ (\%)$$

Next, the method of production of electric resistance welded steel pipe in the present invention will be explained.

The method of production of electric resistance welded steel pipe in the present invention comprises hot rolling a steel slab which has the above chemical composition, coiling it at 600°C or less to obtain hot rolled steel plate, then forming this hot rolled steel plate into a pipe shape and welding its edge faces by electric resistance welding to obtain electric resistance welded steel pipe. Further, this electric resistance welded steel pipe is heated to a heating temperature of 400 to 720°C in range.

Below, the reasons for limitation of the production conditions will be explained in detail.

First, a steel slab which has the above chemical composition is used and hot rolled preferably by a heating temperature of 1050 to 1250°C and a finish rolling temperature of 750 to 900°C in range.

The heating temperature is preferably made the above range so as to make the carbides sufficiently form solid solutions and prevent coarsening of the crystal grains. Due to this, it is possible to sufficiently secure strength and possible to obtain the necessary yield ratio.

The finish rolling temperature is preferably made the above range so as to refine the austenite grain size and sufficiently promote transformation to ferrite. Due to this, it is possible to lower the yield ratio of the hot rolled steel plate as coiled.

After that, preferably, the steel plate is cooled by accelerated cooling at a 10°C/s or more cooling rate and is immediately coiled after the cooling. Note that, the coiling temperature is 10 to 30°C or so lower than the stop temperature of the accelerated cooling, but is substantially the same. Here, the cooling speed is made the average speed at the center of the steel plate thickness and the temperatures are made the average temperatures of the steel plate.

The cooling rate of the accelerated cooling is preferably made the above range so as to cause the formation of martensite or bainite or other hard phases. Due to this, the strength can be sufficiently secured. The faster the cooling rate, the better. The upper limit is not prescribed, but due to limitations in equipment, making it over 100°C/s is difficult. With the thickness of the steel plate of the present invention, usually 50°C/s is the upper limit.

Note that, in the present invention, the thickness of the steel plate after hot rolling is not limited, but the invention is particularly effective at 10 to 25 mm.

The coiling temperature after accelerated cooling is important from the viewpoint of the deformation characteristics. By making the coiling temperature 600°C or less, ferrite can be produced and Nb carbides can be made to sufficiently precipitate. Note that, the lower limit of the coiling temperature is not particularly set. It may also be room temperature.

Next, the above hot rolled steel plate is formed into a pipe and the edge faces are welded by electric resistance welding to obtain electric resistance welded steel pipe.

In the present invention, when forming the hot rolled steel plate into a pipe, it is sufficient that the hot rolled steel plate can be continuously formed into an open pipe. Any known forming method may be applied. The method is not particularly limited.

In the present invention, when welding by electric resistance welding, a welding means is used to heat the circumferential direction edges of the open pipe and the thus heated edges are made to abut against each other for press bonding. As the welding method, either of the known electrical resistance welding method which utilizes a high frequency current or induction heating welding method may be used. The method is not particularly limited.

**For** the electric resistance welded steel pipe of which circumferential direction edges of the open pipe were welded together the bead which was formed at the weld zone were cut off by bead cutting, then the seam weld portion is heated by high frequency induction heat treatment to the austenite region. By heating the seam by high frequency induction heat treatment, it is possible to control the hardness of the seam weld zone and prevent the deterioration of the toughness of the seam weld zone.

After heating the same, preferably sizing rolls are used to adjust the outside shape and dimensions in a sizing step, then the pipe is cut to predetermined lengths by a cutting machine. At this sizing step, a plural sizing rolls are used to obtain electric resistance welded steel pipe of the predetermined dimensions and shape.

Next, the electric resistance welded steel pipe which results from the above-mentioned steps is reheated at a heating temperature of 400 to 720°C in range. That is, after the pipe-making comprised of the forming and welding steps, the electric resistance welded steel pipe is tempered. After that, the surface of the electric resistance welded steel pipe is coated with a resin. The conditions for the coating are not particularly limited. The usually performed coating method can be applied. The temperature of the heating of the coating is generally 200 to 250°C.

Below, the tempering step after the pipe-making in the present invention will be explained in detail.

In the present invention, the hot rolled steel plate is coiled at the above coiling temperature and is made into pipe to obtain electric resistance welded steel pipe, then this electric resistance welded steel pipe is reheated and tempered at the reheating temperature of 400 to 720°C in range. By tempering electric resistance welded steel pipe with reduced Nb composition, , the solute C further precipitates as cementite or Nb carbides or other carbides. However, the amount of addition of Nb is reduced, so the amount of precipitation of Nb carbides is small and strengthening by precipitation is suppressed.

Further, the dislocations which were introduced in the process of forming the steel pipe are pinned by the precipitated fine carbides and carbon atom clusters and Nb carbides. Note that, direct observation of pinning is generally difficult, but when yield elongation occurs in a tensile test in the longitudinal direction of the steel pipe, it can be judged that the dislocations have been pinned.

In the present invention, the reheating temperature (tempering temperature) is made 400 to 720°C. In the conventional electric resistance welded steel pipe, Nb carbides were sufficiently precipitated at the time of coiling the steel slab, but subsequent pipe-making caused strain to be introduced, so reheating caused further precipitation of Nb carbides to be promoted and the yield ratio to rise.

However, the electric resistance welded steel pipe of the present invention is reduced in the amount of Nb, so precipitation hardening due to precipitation of Nb carbides is suppressed compared with the past and the Nb carbides become saturated at a lower temperature side. For this reason, in the past, if tempering at the above tempering temperature, the precipitation of Nb carbides caused hardening and caused the yield strength to rise, but in the present invention, it is possible to suppress the precipitation of Nb carbides. That is, it is possible to suppress the precipitation hardening which is caused by the tempering and possible to suppress the rise in the yield strength after the tempering.

However, if the tempering temperature is too low, martensite and other hard phases do not sufficiently soften and the effect of improvement of the toughness becomes insufficient. Furthermore, to pin the dislocations which were introduced by the pipe-making and prevent strain aging from occurring due to the subsequent heating of the coating, the tempering temperature for fixing the solute carbon is made 400°C or more.

On the other hand, in the range of chemical composition of the steel slab of the present invention, 720°C corresponds to the Ac1 point. If exceeding this, austenite transformation occurs and, as a result, after cooling, ferrite is formed and the YS greatly drops and the targeted strength is liable to be unable to be obtained any longer, so the upper limit of the tempering temperature is made 720°C or less. From the viewpoint of the improvement of the toughness, the tempering temperature is more preferably made 650°C or less.

When tempering the electric resistance welded steel pipe, the reheating time is preferably made 30 s to 120 min. By performing the tempering in this range, it is possible to enjoy the advantageous effect of the present invention more effectively. To more reliably enjoy the advantageous effect of the present invention, the lower limit of the reheating time is more preferably made 60 s.

The cooling method after the reheating is not particularly limited. For example, air-cooling or water-cooling may be used.

After cooling, the electric resistance welded steel pipe is coated from the viewpoint of prevention of corrosion of the pipe. The temperature of heating of this coating in this case is not particularly limited, but 200 to 300°C is preferable.

According to the method of production of electric resistance welded steel pipe according to the present invention which was explained above, it is possible to make a pipe and then temper the pipe so as to thereby suppress precipitation hardening due to precipitation of Nb carbides, suppress a rise in the yield strength, and secure a low yield ratio by using a steel slab with reduced Nb content and tempering the pipe. Further, since a steel slab which was reduced in the amount of Nb is used, the saturation temperature for the Nb carbides in tempering shifts to a lower temperature side from that of the past. As a result, the optimal tempering temperature becomes the Ac1 point or less.

Further, according to the method of production of electric resistance welded steel pipe according to the present invention, since the steel plate is formed into a pipe, then tempered, Nb carbides precipitate, but since the steel is reduced in Nb, strengthening due to precipitation can be suppressed. At the same time, dislocations which are introduced due to pipe-making strain are pinned. Further, the strain which was introduced by the pipe-making promotes the fixing of solute carbon in tempering. As a result, even if the pipe is heated for heating the coating after tempering, strain aging does not occur.

Examples

Below, examples will be used to explain the advantageous effects of the present invention, but the present invention is not limited to the conditions which are used in the following examples.

In the present embodiment, first, steel which was adjusted in chemical composition to suffice the weld cracking parameter Pcm which is shown in Table 1 was melted and continuously cast into a slab in accordance with the usual method. This slab was heated in a heating furnace, was hot rolled to plate with the thickness which is shown in Table 2, was cooled by water cooling, then the hot rolled steel plate was coiled into a coil shape. The heating temperature, the rolling end temperature, the cooling speed, and the coiling temperature at this time were as shown in Table 2.

Next, the coiled hot rolled steel plate was uncoiled while shaping it to a pipe so as to give an outside diameter of the steel pipe which is shown in Table 2 and the edge faces were welded by electric resistance welding to obtain the electric resistance welded steel pipe. Note that, in the present embodiment, the electric resistance welding method was used for welding.

Next, the bead which was formed at the weld zone was cut off, then the seam was heat treated by high frequency induction heat treatment. In the present embodiment, it was heated to 900°C and then acceleratedly cooled.

Next, after the seam was heated, sizing rolls were used to adjust the pipe to the desired dimensions and shape in a sizing step, then the pipe was cut by a cutting machine to the desired lengths.

After the electric resistance welded steel pipe was made the desired length, it was tempered by the tempering temperature and the reheating time which are shown in Table 2. The pipes of Test Nos. 13 and 17 were not tempered.

Next, the above tempered electric resistance welded steel pipe was heat treated corresponding to the heating of the coating. This heat treatment was performed by a heat treatment temperature of 250°C and a heat treatment time of 1 h.

The characteristics of the electric resistance welded steel pipe produced in the above way were measured before and after the heat treatment.

First, the electric resistance welded steel pipe before heat treatment corresponding to heating of the coating was measured for steel pipe characteristics. Specifically, after tempering, a full thickness specimen in the axial direction of the steel pipe (rolling direction) was taken as a tensile test piece from the above electric resistance welded steel pipe at a position 90 degrees from the seam, a tensile test was run, and the yield strength (YS) and the tensile strength (TS) were measured. Further, the obtained YS and TS were used to find the yield ratio (Y/T). Note that, a yield ratio (Y/T) of 90% or less was evaluated as "good".

Furthermore, the electric resistance welded steel pipe before the heat treatment was measured for toughness. The toughness was evaluated by taking a full size V-notch Charpy test piece in the circumferential direction (direction vertical to rolling) of the electric resistance welded steel pipe at a position 90 degrees from the seam, running a V-notch Charpy test, and measuring the absorbed energy (CVN value) at -40°C. Note that an absorbed energy at -40°C of 120J or more was judged to be "good".

Next, the characteristics of the steel pipe after the heat treatment corresponding to heating of a coating (below, referred to as the "aged steel pipe characteristics") were measured.

First, in the same way as the above tensile test piece, a full thickness test piece in the axial direction of the steel pipe was taken from the heat treated electric resistance welded steel pipe, a tensile test was run, the yield strength (YS') and the tensile strength (TS') after heat treatment were measured, and amount of rise $\Delta$YS of the yield strength was found. $\Delta$YS is the difference of the yield strengths before and after heat treatment (YS'-YS). In evaluating the strain aging resistance, a $\Delta$YS of 30 MPa or less was judged as "good".

Further, the obtained YS' and TS' were used to find the yield ratio (Y'/T'). A yield ratio (Y'/T') of 90% or less was evaluated as "good".

The above measurement results are shown in Table 2.

[Table 1]

| Steel type | C | Si | Mn | P | S | Nb | Al | Ti | N | Ni | Cu | Mo | C | V | Ca | Pcm | Remarks |
|---|---|---|---|---|---|---|---|---|---|---|---|---|---|---|---|---|---|
| A | 0.07 | 0.18 | 1.41 | 0.0014 | 0.0021 | 0.008 | 0.024 | 0.012 | 0.0032 | | | | | | | 0.15 | Inv.ex. |
| B | 0.05 | 0.07 | 1.28 | 0.0008 | 0.0014 | 0.005 | 0.032 | 0.015 | 0.0026 | 0.18 | 0.35 | 0.1 | | | 0.0023 | 0.14 | Inv.ex. |
| C | 0.05 | 0.12 | 1.05 | 0.0018 | 0.0012 | 0.009 | 0.019 | 0.014 | 0.0042 | | | 0.24 | | | 0.0018 | 0.12 | Inv.ex. |
| D | 0.1 | 0.25 | 0.82 | 0.0011 | 0.0028 | 0.004 | 0.036 | 0.016 | 0.0035 | | | | | | 0.0031 | 0.15 | Inv.ex. |
| E | 0.06 | 0.08 | 1.77 | 0.0015 | 0.0024 | 0.007 | 0.018 | 0.013 | 0.0024 | 0.24 | 0.45 | | 0.21 | | 0.0024 | 0.19 | Inv.ex. |
| F | 0.06 | 0.19 | 1.91 | 0.0009 | 0.0008 | 0.012 | 0.022 | 0.015 | 0.0028 | | | | | 0.06 | | 0.17 | Inv.ex. |
| G | 0.1 | 0.22 | 1.55 | 0.0068 | 0.0012 | 0.015 | 0.042 | 0.016 | 0.0037 | | | | | | 0.0036 | 0.18 | Inv.ex. |
| H | 0.12 | 0.15 | 1.32 | 0.0045 | 0.013 | 0.017 | 0.055 | 0.012 | 0.0039 | | | | | | | 0.19 | Inv.ex. |
| AA | 0.09 | 0.17 | 1.36 | 0.0013 | 0.0023 | <u>0.024</u> | 0.035 | 0.014 | 0.0033 | | | | | | | 0.16 | Comp.ex. |
| BB | 0.08 | 0.09 | 1.61 | 0.0011 | 0.0014 | <u>0.042</u> | 0.038 | 0.012 | 0.0022 | 0.22 | 0.51 | | | | 0.0025 | 0.19 | Comp.ex. |
| CC | 0.07 | 0.12 | 1.92 | 0.0011 | 0.0012 | <u>0.001</u> | 0.044 | 0.012 | 0.0028 | | | | | | | 0.15 | Comp.ex. |

* Underlines indicate outside range of present invention.

[Table 2]

| Test no. | Steel type | Thickness | Hot rolling conditions | | | | Steel pipe OD | Tempering conditions | | Steel pipe characteristics | | | | Aged steel pipe characteristics (250°C-1 hr) | | | | Remarks |
|---|---|---|---|---|---|---|---|---|---|---|---|---|---|---|---|---|---|---|
| | | | Heating temp. | Hot rolling finish temp. | Cooling rate (plate thickness center) | Coiling temp. | | Tempering temp. | Reheating time | YS | TS | Y/T | CVN value -40°C | YS' | ΔYS | TS' | Y'/T' | |
| | | mm | °C | °C | °C/s | °C | mm | °C | (s) | MPa | MPa | % | J | MPa | MPa | MPa | % | |
| 1 | A | 16 | 1230 | 880 | 18 | 510 | 244.5 | 680 | 60 | 428 | 481 | 89 | 246 | 439 | 11 | 493 | 89 | Inv.ex. |
| 2 | A | 16 | 1230 | 880 | 23 | 180 | 249.5 | 680 | 60 | 468 | 532 | 88 | 297 | 475 | 7 | 534 | 89 | Inv.ex. |
| 3 | A | 16 | 1230 | 880 | 23 | 480 | 244.5 | 420 | 60 | 450 | 506 | 89 | 297 | 476 | 26 | 529 | 90 | Inv.ex. |
| 4 | B | 18 | 1180 | 830 | 16 | 460 | 339.7 | 650 | 300 | 491 | 558 | 88 | 313 | 485 | -6 | 557 | 87 | Inv.ex. |
| 5 | B | 18 | 1180 | 830 | 16 | 470 | 339.7 | 700 | 300 | 455 | 529 | 86 | 307 | 451 | -4 | 524 | 86 | Inv.ex. |
| 6 | C | 14 | 1130 | 800 | 21 | 100 | 244.5 | 680 | 120 | 577 | 641 | 90 | 379 | 578 | 1 | 657 | 88 | Inv.ex. |
| 7 | D | 16 | 1230 | 850 | 20 | 450 | 244.5 | 500 | 1800 | 412 | 490 | 84 | 178 | 426 | 14 | 507 | 84 | Inv.ex. |
| 8 | E | 14 | 1130 | 820 | 21 | 70 | 193.6 | 700 | 60 | 502 | 577 | 87 | 201 | 505 | 3 | 567 | 89 | Inv.ex. |
| 9 | F | 12 | 1180 | 790 | 17 | 550 | 193.6 | 550 | 3600 | 499 | 561 | 89 | 355 | 512 | 13 | 575 | 89 | Inv.ex. |
| 10 | G | 13 | 1230 | 850 | 15 | 460 | 219.1 | 610 | 10 | 502 | 590 | 85 | 290 | 505 | 3 | 587 | 86 | Inv.ex. |
| 11 | H | 13 | 1230 | 860 | 13 | 510 | 219 | 580 | 10 | 496 | 577 | 86 | 212 | 502 | 6 | 577 | 87 | Inv.ex. |
| 12 | A | 16 | 1230 | 880 | 23 | 170 | 244.5 | _300_ | 60 | 497 | 518 | _96_ | 280 | 538 | _41_ | 543 | _99_ | Comp.ex. |
| 13 | A | 16 | 1230 | 880 | 23 | 180 | 244.5 | _None_ | _None_ | 472 | 513 | _92_ | 274 | 540 | _68_ | 557 | _97_ | Comp.ex. |
| 14 | _AA_ | 16 | 1230 | 880 | 23 | 180 | 244.5 | 500 | 60 | 498 | 513 | _97_ | 315 | 523 | 25 | 534 | _98_ | Comp.ex. |
| 15 | _BB_ | 16 | 1230 | 880 | 23 | 470 | 244.5 | 600 | 60 | 559 | 582 | _96_ | 299 | 557 | -2 | 580 | _96_ | Comp.ex. |
| 16 | _CC_ | 16 | 1230 | 880 | 18 | 500 | 244.5 | 600 | 60 | _425_ | _483_ | 88 | _95_ | _419_ | -6 | _482_ | 87 | Comp.ex. |
| 17 | G | 13 | 1230 | 850 | 15 | 460 | 219.1 | _None_ | _None_ | 561 | 589 | _95_ | 278 | 606 | _45_ | 625 | _97_ | Comp.ex. |

* Underlines indicate outside range of present invention or nonsatisfaction of targeted property.

As shown in Table 2, in each of the invention examples within the range of the present invention, a yield ratio of the electric resistance welded steel pipe before and after the heat treatment of a 90% or less low yield ratio was secured. Further, good results could be obtained in each of the strain aging resistance characteristics.

In Test No. 12, the tempering temperature was lower than the range of the present invention, so the precipitation of fine carbides and carbon atom clusters and the precipitation of Nb carbides were insufficient, the dislocations which were introduced due to the pipe-making strain were insufficiently pinned, the yield ratio after heat treatment rose, and good strain aging resistance characteristics could not be obtained.

In each of Test Nos. 13 and 17, the pipe was not tempered after formation and was heated for coating, so good aged steel pipe characteristics could not be obtained. This was because since no tempering was performed after making the pipe, a large amount of solute C remained and precipitation of Nb carbides due to the heat treatment after pipe-making was promoted, so as a result, the yield strength rose and the yield ratio after heat treatment greatly rose.

In each of Test Nos. 14 and 15, the content of Nb was made over the range of the present invention, so the precipitation hardening due to the Nb carbides which precipitated due to tempering could not be sufficiently suppressed and the yield ratio could not be reduced.

In Test No. 16, the content of Nb was made less than the range of the present invention, so at the time of hot rolling, the recrystallization of austenite was not suppressed and the structure could not be sufficiently refined and the CVN value dropped by a large margin.

From these results, it is possible to confirm the above-mentioned findings. Further, it is possible to limit the chemical composition of the steel slab explained above and provide grounds for limitation of the method of production.

## Claims

1. A method of production of electric resistance welded steel pipe **characterized by** hot rolling a steel slab which contains, by mass%,
   C: 0.03 to 0.12%,
   Si: 0.03 to 0.5%,
   Mn: 0.5 to 2.0%,
   P: 0.03% or less,
   S: 0.003% or less,
   Al: 0.10% or less,
   Nb: 0.003% to less than 0.02%,
   Ti: 0.005 to 0.03%, and
   N: 0.006% or less, and
   optionally one or more of elements which are selected from
   Ni: 1% or less,
   Cu: 1% or less,
   Mo: 0.3% or less,
   Cr: 0.8% or less,
   V: 0.1% or less, and
   Ca: 0.0060% or less,
   which satisfies Ti>3.4N and has a weld cracking parameter Pcm (%) which is calculated by the following formula (1) which satisfies Pcm≤0.21, and which has a balance of Fe and unavoidable impurities,
   coiling the hot rolled steel plate at 600°C or less, then
   forming this hot rolled steel plate to a tube shape and welding the edge faces by electric resistance welding to thereby obtain electric resistance welded steel pipe, and
   heating this electric resistance welded steel pipe at a heating temperature of 400 to 720°C in range and a heating time of 30 s to 120 min:

$$Pcm(\%)=C+Si/30+Mn/20+Cu/20+Ni/60+Cr/20+Mo/15+V/10 ... (1)$$

   where, C, Si, Mn, Cu, Ni, Cr, Mo, and V are contents (mass%) of those elements, and not added elements are calculated as 0.

2. An electric resistance welded steel pipe **characterized by** containing, by mass%,
   C: 0.03 to 0.12%,

Si: 0.03 to 0.5%,
Mn: 0.5 to 2.0%,
P: 0.03% or less,
S: 0.003% or less,
Al: 0.10% or less,
Nb: 0.003% to less than 0.02%,
Ti: 0.005 to 0.03%, and
N: 0.006% or less, and
optionally one or more of elements which are selected from
Ni: 1% or less,
Cu: 1% or less,
Mo: 0.3% or less,
Cr: 0.8% or less,
V: 0.1 % or less, and
Ca: 0.0060% or less,
satisfying Ti>3.4N and having a weld cracking parameter Pcm (%) which is calculated by the following formula (1) which satisfies Pcm≤0.21, and having a balance of Fe and unavoidable impurities, wherein dislocations which are introduced in a forming process are pinned by carbon atom clusters, fine carbides, and Nb carbides:

$$Pcm(\%)=C+Si/30+Mn/20+Cu/20+Ni/60+Cr/20+Mo/15+V/10... (1)$$

where, C, Si, Mn, Cu, Ni, Cr, Mo, and V are contents (mass%) of those elements, and not added elements are calculated as 0.

**Patentansprüche**

1.  Verfahren zum Herstellen eines elektrisch widerstandsgeschweißten Stahlrohrs, **gekennzeichnet durch** Warmwalzen einer Stahlbramme, die in Masse-% enthält:

    C: 0,03 bis 0,12%,
    Si: 0,03 bis 0,5%,
    Mn: 0,5 bis 2,0%,
    P: 0,03% oder weniger,
    S: 0,003% oder weniger,
    Al: 0,10% oder weniger,
    Nb: 0,003% bis weniger als 0,02%,
    Ti: 0,005 bis 0,03%, und
    N: 0,006% oder weniger, und
    optional ein oder mehrere Elemente, die ausgewählt sind aus
    Ni: 1% oder weniger,
    Cu: 1% oder weniger,
    Mo: 0,3% oder weniger,
    Cr: 0,8% oder weniger,
    V: 0,1% oder weniger, und
    Ca: 0,0060% oder weniger,
    die Ti>3,4N erfüllt und einen Schweißrissigkeitsparameter Pcm (%) aufweist, der durch die folgende Formel (1) berechnet wird, der Pcm≤0,21 erfüllt, und die einen Rest Fe und unvermeidbare Verunreinigungen hat, Aufrollen der warmgewalzten Stahlplatte bei 600°C oder weniger, dann Formen dieser warmgewalzten Stahlplatte zu einer Röhrenform und Schweißen der Kantenflächen durch elektrisches Widerstandsschweißen, um dadurch ein elektrisch widerstandsgeschweißtes Stahlrohr zu erhalten, und Erwärmen dieses elektrisch widerstandsgeschweißten Stahlrohrs auf eine Erwärmungstemperatur im Bereich von 400 bis 720°C und mit einer Erwärmungszeit von 30 s bis 120 min:

$$Pcm(\%)=C+Si/30+Mn/20+Cu/20+Ni/60+Cr/20+Mo/15+V/10... \qquad (1)$$

wobei C, Si, Mn, Cu, Ni, Cr, Mo und V die Gehalte (Masse-%) dieser Elemente sind, und nicht hinzugefügte Element als 0 berechnet werden.

2. Elektrisch widerstandsgeschweißtes Stahlrohr, **dadurch gekennzeichnet, dass** es in Masse-% enthält
C: 0,03 bis 0,12%,
Si: 0,03 bis 0,5%,
Mn: 0,5 bis 2,0%,
P: 0,03% oder weniger,
S: 0,003% oder weniger,
Al: 0,10% oder weniger,
Nb: 0,003% bis weniger als 0,02%,
Ti: 0,005 bis 0,03%, und
N: 0,006% oder weniger, und
optional ein oder mehrere Elemente, die ausgewählt sind aus Ni: 1% oder weniger,
Cu: 1% oder weniger,
Mo: 0,3% oder weniger,
Cr: 0,8% oder weniger,
V: 0,1% oder weniger, und
Ca: 0,0060% oder weniger,
wobei es Ti>3,4N erfüllt und einen Schweißrissigkeitsparameter Pcm (%)aufweist, der durch die folgenden Formel (1) berechnet wird, der Pcm≤0,21 erfüllt, und einen Rest Fe und unvermeidbare Verunreinigungen hat, wobei Versetzungen, die in einem Formungsprozess eingeführt werden, durch Kohlenstoffatomcluster, feine Karbide und Nb-Karbide verankert werden:

$$Pcm(\%)=C+Si/30+Mn/20+Cu/20+Ni/60+Cr/20+Mo/15+V/10... \qquad (1)$$

wobei C, Si, Mn, Cu, Ni, Cr, Mo, und V die Gehalte (Masse-%) dieser Elemente sind, und nicht hinzugefügte Element als 0 berechnet werden.

**Revendications**

1. Procédé de production d'un tuyau d'acier soudé par résistance électrique, **caractérisé par** le laminage à chaud d'une brame d'acier contenant, en pourcentage en masse,
C : de 0,03 à 0,12 %,
Si : de 0,03 à 0,5 %,
Mn : de 0,5 à 2,0 %,
P : 0,03 % ou moins,
S : 0,003 % ou moins,
Al : 0,10 % ou moins,
Nb : de 0,003 % à moins de 0,02 %,
Ti : 0,005 à 0,03 %, et
N : 0,006 % ou moins, et,
facultativement, un ou plusieurs éléments sélectionnés entre
Ni : 1 % ou moins,
Cu : 1 % ou moins,
Mo : 0,3 % ou moins,
Cr : 0,8 % ou moins,
V : 0,1 % ou moins, et
Ca : 0,0060 % ou moins,
satisfaisant à Ti > 3,4N et présentant un paramètre de sensibilité à la fissuration pendant le soudage Pcm (%) calculé au moyen de la formule (1) suivante, satisfaisant à Pcm ≤ 0,21, le reste consistant en Fe et en impuretés inévitables,

le bobinage de la feuille d'acier laminé à chaud à 600° C ou moins, puis le formage en tube de ladite feuille d'acier laminé à chaud et le soudage des rives par résistance électrique de manière à obtenir un tuyau d'acier soudé par résistance électrique, et

le chauffage dudit tuyau d'acier soudé par résistance électrique à température de chauffage comprise entre 400 et 720° C pendant une température de chauffe comprise entre 30 s et 120 min :

$$\text{Pcm (\%)} = C + Si/30 + Mn/20 + Cu/20 + Ni/60 + Cr/20 + Mo/15 + V/10 \dots \qquad (1)$$

où C, Si, Mn, Cu, Ni, Cr, Mo et V sont des teneurs (en pourcentage en masse) desdits éléments, et où les éléments non ajoutés sont représentés par 0.

2. Tuyau d'acier soudé par résistance électrique **caractérisé en ce qu'**il contient, en pourcentage en masse,
C : de 0,03 à 0,12 %,
Si : de 0,03 à 0,5 %,
Mn : de 0,5 à 2,0 %,
P : 0,03 % ou moins,
S : 0,003 % ou moins,
Al : 0,10 % ou moins,
Nb : 0,003 % à moins de 0,02 %,
Ti : de 0,005 à 0,03 %, et
N : 0,006 % ou moins, et
facultativement, un ou plusieurs éléments sélectionnés entre
Ni : 1 % ou moins,
Cu : 1 % ou moins,
Mo : 0,3 % ou moins,
Cr : 0,8 % ou moins,
V : 0,1 % ou moins, et
Ca : 0,0060 % ou moins,
satisfaisant à Ti > 3,4N et présentant un paramètre de sensibilité à la fissuration pendant le soudage Pcm (%) calculé au moyen de la formule (1) suivante, satisfaisant à Pcm ≤ 0,21, le reste consistant en Fe et en impuretés inévitables, où

des dislocations introduites pendant un processus de formage sont épinglées par des groupes d'atomes de carbone, des carbures à grains fins et des carbures de Nb :

$$\text{Pcm (\%)} = C + Si/30 + Mn/20 + Cu/20 + Ni/60 + Cr/20 + Mo/15 + V/10 \dots \quad (1)$$

où C, Si, Mn, Cu, Ni, Cr, Mo et V sont des teneurs (en pourcentage en masse) desdits éléments, et où les éléments non ajoutés sont représentés par 0.

# Fig.1

# Fig.2

# Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008121036 A
- EP 1568792 A1
- JP 2005015823 A
- JP 2003293089 A
- JP H3211255 A
- JP 2005060838 A
- JP 2005060840 A
- JP 2006122932 A
- JP 2006289482 A